# EUROPÄISCHE PATENTANMELDUNG

(11) **EP 0 691 532 A2**
(43) Veröffentlichungstag der Anmeldung: **10.01.1996**
(21) Anmeldenummer: 95109293.1
(22) Anmeldetag: 16.06.1995
(51) Int. Cl.: G01L 5/00, G01P 1/12

(54) **Anordnung zur elektronischen Messung der Belastung eines Fahrwerks**

(30) Priorität: 07.07.1994 DE 4423938
(71) Anmelder: Daimler-Benz Aerospace Airbus Gesellschaft mit beschränkter Haftung, D-21129 Hamburg (DE)
(72) Erfinder: Neveling, Thomas, Dipl.-Ing., D-28816 Stuhr (DE); Zelger, Christian, D-86830 Schwabmünchen (DE); Riess, Gerhard, D-86836 Graben (DE)
(74) Vertreter: Hansmann, Dierk, Dipl.-Ing.

(57) **Zusammenfassung**

Es ist eine Anordnung mit einem Sensor und einer Anzeigevorrichtung vorgesehen, wobei eine Belastung eines Fahrwerkes ermittelbar ist. Hierbei wird eine vertikale Beschleunigung durch einen Sensor erfaßt und das Sensorsignal nach Filterung mit einem vorgegebenen Wert verglichen sowie über eine Anzeigevorrichtung erfaßt.

## Beschreibung

Die Erfindung betrifft eine Anordnung gemäß dem Oberbegriff des Patentanspruchs 1.

Die Belastung eines Fahrwerks an Flugzeugen wird derzeit durch mechanische Mittel gemessen, die einen einfachen Aufbau haben. Eine derartige Anordnung besteht beispielsweise aus einer Blechplatte und einem Dorn bzw. Nagel, die relativ zueinander verstellbar sind. Im Falle eines harten Landevorgangs drückt der Dorn durch das vorhandene Blech hindurch und es läßt sich nach der Landung feststellen, ob das Fahrwerk normal oder abnormal belastet wurde. Diese Anordnung muß im Falle einer zu harten Landung ausgewechselt werden.

Eine derartige Anordnung ist ersichtlicherweise nicht wartungsfrei und läßt die Belastung des Fahrwerks nur insoweit erkennen, als ein bestimmter Wert überschritten ist, während andere Grenzbelastungen oder niedrige Belastungen, die nicht angezeigt werden, nicht erfaßbar sind.

Der Erfindung liegt die Aufgabe zugrunde, eine Anordnung zur elektronischen Messung der Belastung eines Fahrwerks, insbesondere an Flugzeugen, zu schaffen, die wartungsfrei arbeitet und nicht nur bei Überschreiten eines Grenzwertes eine Anzeige liefert.

Diese Aufgabe wird erfindungsgemäß durch die im kennzeichnenden Teil des Patentanspruchs 1 angegebenen Merkmale gelöst.

Die Erfindung schafft eine Anordnung zur elektronischen Messung der Belastung eines Fahrwerks, bei welcher eine vertikale Beschleunigung durch einen Sensor erfaßt wird und das auf diese Weise erzeugte Sensorsignal nach Filterung mit wenigstens einem vorbestimmten Wert verglichen wird, um auf diese Weise eine Anzeige der tatsächlichen Belastung des Fahwerks zu liefern. Durch die Erfindung wird die Fahrwerksbelastung als vertikale Beschleunigung erfaßt, die vom Sensor erhaltenen Ausgangssignale werden gefiltert und mit mindestens einem Vergleichswert verglichen.

Gemäß der Erfindung wird die Beschleunigung während des Landestoßes erfaßt und gegebenenfalls gespeichert, wenn die Beschleunigung größer als mindestens ein, vorzugsweise drei voreingestellte Werten ist, oder gleich einem, vorzugsweise einem von drei voreingestellen Werten ist.

Die gemäß der Erfindung vorgesehene Anzeigeeinrichtung besteht beispielsweise aus Anzeigelampen, die je nach ermitteltem Grenzwert aufleuchten.

Gemäß einer weiteren Ausgestaltung der Erfindung ist ein nicht flüchtiger Speicher vorgesehen, der auch während eines Stromausfalls die gemessenen Belastungs- bzw. Beschleunigungswerte speichert.

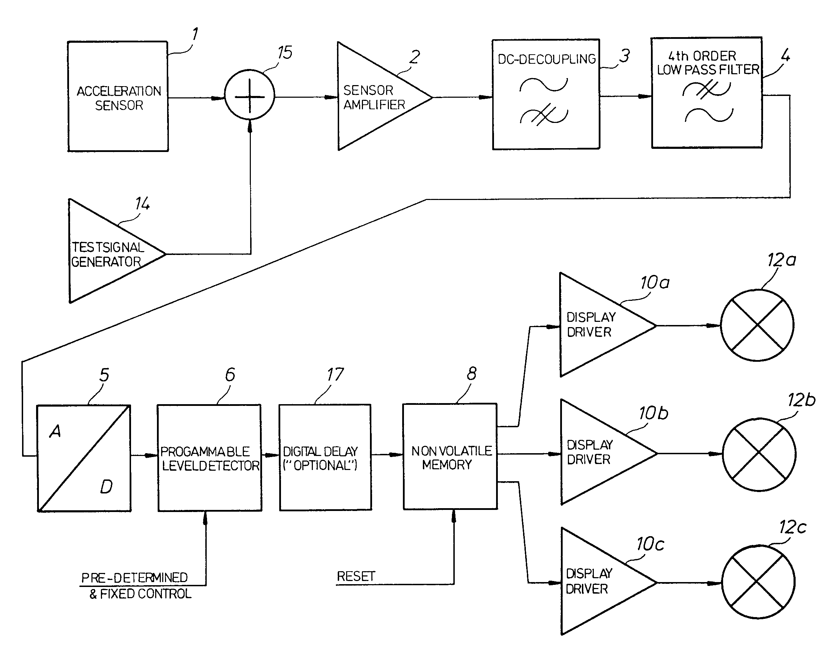

Die erfindungsgemäße Anordnung wird anhand einer Zeichnung zur Erläuterung weiterer Merkmale und Vorteile beschrieben. Die Zeichnung zeigt ein Blockschaltbild der erfindungsgemäßen Anordnung.

Gemäß der Zeichnung ist ein Beschleunigungssensor 1 vorgesehen, dessen Ausgangssignal vorzugsweise über einen Verstärker 2 an ein Hochpaßfilter 3 gegeben wird. Nach der Filterung im Hochpaßfilter 3 wird dessen Ausgangssignal auf ein Tiefpaßfilter 4 gegeben, welches vorzugsweise ein Tiefpaßt filter vierter Ordnung darstellt. Das Tiefpaßfilter 4 ist ausgangsseitig über einen A/D-Wandler 5 mit einem Pegeldetektor 6 verbunden.

Der Pegeldetektor 6 ist gemäß einer bevorzugten Ausführungsform programmierbar und ermöglicht die Eingabe von mehreren, vorzugsweise drei vorbestimmten Vergleichswerten, mit welchen das Eingangssignal des programmierbaren Pegeldetektors 6 verglichen wird.

Gemäß dem dargestellten Blockschaltbild ist weiterhin ein nicht flüchtiger Speicher 8 vorgesehen, der vorzugsweise ausgangsseitig des Pegeldetektors 6 vorgesehen ist und bei dieser Ausführungsform Grenzwertüberschreitungen speichert, die somit auch bei Ausfall der bordseitigen Stromversorgung eines Flugzeuges erhalten bleibt.

Das Ausgangssignal des Pegeldetektors 6 oder das Ausgangssignal des nicht flüchtigen Speichers 8, gemäß dem Blockschaltbild, wird an eine Anzeigeeinheit gegeben, die gemäß der dargestellten Ausführungsform aus Treibern 10a, 10b, 10c für Anzeigelampen 12a, 12b, 12c besteht.

Der Beschleunigungssensor 1 ist ein sogenannter DMS-Sensor, d.h. ein Sensor auf Folienbasis. Um die Funktion der gesamten Schaltung zu überprüfen, kann gemäß einer weiteren Ausführungsform ein Testsignal-Generator 14 vorgesehen sein, dessen Ausgangssignal über ein ODER-Glied 15 auf den Ausgang des Beschleunigungssensors 1 geschaltet wird. Der Testsignal-Generator 14 erzeugt Testfunktionsimpulse, welche die gesamte, vorstehend beschriebene Schaltung durchlaufen und damit die Möglichkeit eröffnen, Aufschluß über die ordnungsgemäße Funktionsfähigkeit zu geben.

Der Verstärker 2 hat vorzugsweise die Form eines Operationsverstärkers und ermöglicht die Anpassung des Sensorsignals an den gewählten Meßbereich, infolgedessen die Genauigkeit erhöht wird.

Das Hochpaßfilter 3 bewirkt eine Entkopplung von Gleichspannungs /Niederfrequenzanteilen, welche der statischen Beschleunigung entsprechen, bis zu einer definierten Grenzfrequenz, die abhängig von der Flugzeugstruktur gewählt wird. Die Grenzfrequenz des Hochpasses ist wesentlich für die Funktion der gesamten Anordnung und läßt sich empirisch ermitteln.

Das an das Hochpaßfilter 3 angeschlossene Tiefpaßfilter 4 ist zur Eliminierung von Frequenzanteilen oberhalb einer definierten Grenzfrequenz vorgesehen. Die Ordnung des eingesetzten Tiefpaßfilters und dessen Grenzfrequenz sind abhängig von der Flugzeugstruktur. Es hat sich allerdings durch Versuche gezeigt, daß Tiefpaßfilter mit niedrigerer Ordnung zu einer ungenauen Ermittlung der Fahrwerksbelastung führen. Die Grenzfrequenz des Tiefpaßfilters wird ebenfalls empirisch abhängig von der jeweiligen Flugzeugstruktur ermittelt.

Gemäß einer bevorzugten Ausführungsform wird das Ausgangssignal des Tiefpaßfilters 4 an den Analog/Digital-Wandler 5 angelegt, der das Beschleunigungssensorsignal vorteilhafterweise in ein digitales 12-Bit-Wort umwandelt. Ersichtlicherweise können auch mehr oder weniger Bits abhängig von der gewünschten Auflösung benutzt werden. Dieses Bit-Wort aktiviert entsprechend seinem Wert eine Adresse des nicht flüchtigen Speichers 8, der vorzugsweise die Form eines EPROM hat.

Der Pegeldetektor 6, vorzugsweise ein programmierbarer Pegeldetektor, ermöglicht die Eingabe von mindestens einem, vorzugsweise mehreren Grenzwerten, um eine Aussage über eine Überbelastung der Fahrwerksstruktur zu geben. Der oder die Grenzwerte werden in einem Speicher des Pegeldetektors, vorzugsweise einem EPROM, fest programmiert. Hierdurch ist eine unveränderbare Einstellung von Grenzwerten über die gesamte Lebensdauer der beschriebenen Anordnung sowie eine einfache Änderung der Grenzwerte bei der Konzipierung der Anordnung, d.h. vor der Auslieferung, ermöglicht. Mit anderen Worten heißt dies, daß die Grenzwerte im programmierbaren Pegeldetektor vor der Auslieferung fest eingegeben werden, aber abhängig von der Fahrwerkstruktur bei jeder Anordnung unterschiedlich eingegeben werden können, während nach Fertigstellung der Anordnung und Auslieferung eine Verstellung der Grenzwerte nicht mehr möglich ist. Weiterhin ist die experimentelle Ermittlung von unbekannten Grenzwerten dadurch möglich, daß mittels eines Werkzeuges der Speicher bzw. EPROM des Pegeldetektors 6 ausgetauscht werden kann.

Der bei einer bevorzugte Ausführungsform der Anordnung vorgesehene nicht flüchtige Speicher 8 mit einem EPROM zur Speicherung möglicher Grenzwertüberschreitungen hat zur Aufgabe, auch bei Ausfall der Stromversorgung die gespeicherten Werte zu halten.

Die Anzeigeeinrichtung besteht aus den bereits erwähnten Treibern 10a bis 10c und den jeweils zugehörigen, mit den Treibern verbundenen Anzeigelampen 12a bis 12c, wobei die Zahl dieser Lampen und die der zugehörigen Treiber bedarfsabhängig gewählt wird. Als Lampen können gegebenenfalls LED's benutzt werden.

Anstelle der beschriebenen Anzeigeeinheit läßt sich die Anzeige der Grenzwertüberschreitung auch über Anzeigegeräte oder PC mit paralleler Schnittstelle realisieren.

Die erfindungsgemäße Anordnung ermöglicht zumindest hinsichtlich des Auswertungsteils eine digitale Konzipierung und insgesamt ist eine Messung statischer Beschleunigungen möglich, wobei vorgegebene Grenzwerte berücksichtigt werden und bei der Auswertung die jeweiligen Grenzwertüberschreitungen gemessen bzw. zur Anzeige gebracht werden.

Der nicht flüchtige Speicher bzw. Permanentspeicher 8 läßt sich gemäß einer weiteren Ausgestaltung der erfindungsgemäßen Anordnung durch eine RESET-Taste zurücksetzen, d.h. die darin gespeicherten Werte können bei Bedarf gelöscht werden.

Vorteilhafterweise sind die im Pegeldetektor 6 speicherbaren Grenzwerte wie auch die Zahl der Grenzwerte variabel.

Gemäß einer weiteren Ausführungsform der Erfindung ist zwischen dem Pegeldetektor 6 und dem nicht flüchtigen Speicher 8 eine digitale Verzögerung 17 vorgesehen. Mit der digitalen Verzögerung 17 kann bei der digitalen Meßwerterfassung das gemessene Signal verzögert werden, d.h. die Auswertung und damit das Einschreiben des ausgewerteten Signals in den Speicher 8 läßt sich mit der Verzögerungsschaltung 17 um bis zu mehreren Sekunden verzögern. Die Verzögerungsschaltung 17 hat hierbei die Funktion eines ergänzenden Tiefpaßfilters mit extrem niedriger Grenzfrequenz. Die Verzögerungszeit der Verzögerungsschaltung 17 läßt sich über einen Schalter, beispielsweise einen DIP-Schalter bzw. Jumper (0-Ohm-Widerstände) je nach Auflösung einstellen, wobei die Einstellung vorzugsweise 8 Bit = 256 Stufen entspricht. Die Verzögerungsschaltung 17 wird vorwiegend bei der Messung von sehr langsamen Signalen bzw. trägen Meßgrößen wie Beschleunigung, Temperatur etc. eingesetzt.

## Patentansprüche

1. Anordnung zur elektronischen Messung der Belastung eines Fahrwerks, insbesondere an Flugzeugen, mit einem Sensor und mit einer Anzeigeeinrichtung, dadurch gekennzeichnet, daß der Sensor (1) zur Messung einer vertikalen Beschleunigung vorgesehen ist, daß der Ausgang des Sensors (1) über ein HP-Filter (3) mit einem TP-Filter (4) verbunden ist, und daß der Ausgang des TP-Filters (4) an einen Pegeldetektor (6) geschaltet ist, welcher ausgangsseitig mit der Anzeigeeinrichtung (10, 12) verbunden ist.

2. Anordnung nach Anspruch 1, dadurch gekennzeichnet, daß das TP-Filter (4) ein Filter vierter Ordnung ist.

3. Anordnung nach Anspruch 1 oder 2, dadurch gekennzeichnet, daß der Pegeldetektor (6) programmierbar ist.

4. Anordnung nach wenigstens einem der vorangehenden Ansprüche, dadurch gekennzeichnet, daß das TP-Filter (4) über einen A/D-Wandler (5) an den Pegeldetektor (6) geschaltet ist.

5. Anordnung nach wenigstens einem der vorangehenden Ansprüche, dadurch gekennzeichnet, daß ein Permanentspeicher (8) zur Speicherung der Beschleunigungswerte vorgesehen ist.

6. Anordnung nach Anspruch 5, dadurch gekennzeichnet, daß der Permanentspeicher (8) mit dem Ausgang des Pegeldetektors (6) verbunden ist.

7. Anordnung nach wenigstens einem der vorangehenden Ansprüche, dadurch gekennzeichnet, daß ein Testsignal-Generator (14) vorgesehen ist.

8. Anordnung nach wenigstens einem der vorangehenden Ansprüche, dadurch gekennzeichnet, daß eine Verzögerungsschaltung (17) vorgesehen ist.
